Europäisches Patentamt

European Patent Office

Office européen des brevets

(19)

(11) Publication number: **0 020 079**

**B1**

(12) **EUROPEAN PATENT SPECIFICATION**

(45) Date of publication of patent specification: **10.08.83**

(21) Application number: **80301662.5**

(22) Date of filing: **20.05.80**

(51) Int. Cl.³: **H 03 K 13/01,
H 03 K 13/02**

(54) Encoder/decoder circuit.

(30) Priority: **30.05.79 JP 66121/79**

(43) Date of publication of application:
**10.12.80 Bulletin 80/25**

(45) Publication of the grant of the patent:
**10.08.83 Bulletin 83/32**

(84) Designated Contracting States:
**DE FR GB IT**

(56) References cited:
**DE - A - 2 538 543
DE - A - 2 553 632
DE - A - 2 603 608
US - A - 4 112 427**

**ELECTRONIC DESIGN, Vol. 27, No. 8, 12 April
1979 "ICs for Telecommunications" pages 70
to 84**

(73) Proprietor: **FUJITSU LIMITED
1015, Kamikodanaka Nakahara-ku
Kawasaki-shi Kanagawa 211 (JP)**

(72) Inventor: **Yamasawa, Masao
3-2-41, Nishihashimoto
Sagamihara-shi Kanagawa 229 (JP)**
Inventor: **Ikezawa, Toshi
5-19-5-106, Okamura, Isogo-ku
Yokohama-shi Kanagawa 235 (JP)**
Inventor: **Ohhata, Michinobu
2-15-201, Nishiikuta 5-chome Tama-ku
Kawasaki-shi Kanagawa 214 (JP)**

(74) Representative: **Abbott, Leonard Charles et al,
GILL JENNINGS & EVERY 53-64 Chancery Lane
London WC2A 1HN (GB)**

Courier Press, Leamington Spa, England.

## Encoder/decoder circuit

This invention relates to a per-channel codec (coder/decoder) for a PCM (pulse-code modulation) transmission system.

A codec is utilised for translating (encoding) an analogue voice signal into an appropriate PCM code at the transmission end of a channel, and for reforming (decoding) the analogue voice signal from the transmitted digital data at the receiving end. In these a/d and d/a conversions, the codec requires operation clocks (coding and decoding clocks) which are produced more than a predetermined number of times, for example more than twelve times, per period of the sampling pulses.

In a conventional codec, since the operation clocks are formed by a fixed frequency divider to which read/write clocks for an input/output register of the codec are applied, the frequency of the operation clocks is fixed at a certain value which is determined by the frequency of the read/write clocks and also by the dividing ratio of the fixed frequency divider. Therefore, the conventional codec cannot usually be used in transmission systems which use read/write clocks having different frequencies from one another.

In order to solve the above-mentioned problem, codecs are known which are provided with a plurality of fixed frequency dividers having different dividing ratios from each other and a selection circuit, and which obtain the operation clocks by selectively applying the read/write clocks to the appropriate fixed frequency divider. However, such codecs require many fixed frequency dividers and require an additional signal for selecting the divider. Furthermore, in order to make the best use of a sampling period during the a/d and d/a conversion, it is necessary that all of the dividers of this codec be designed in different circuit configurations. As a result, not only does the circuit design become difficult, but also the hardware of the codec becomes complex.

It is an object of the present invention to provide a codec which is suitable for use in transmission systems which use read/write clocks having different frequencies from one another.

United States Patent No. 4,112,427 discloses a codec which includes a single circuit for performing both the a/d conversion and the d/a conversion.

An article entitled "ICs for Telecommunications" on pages 70—84 of Electronic Design, Vol. 27, No. 8, 12th April 1979, discloses a per-channel codec which comprises separate a/d and d/a converters for encoding the analogue signal and for decoding the digital PCM signal, respectively, and phase locked loops which generate the internal operation clocks.

According to the present invention, a per-channel codec (coder/decoder) comprising analogue/digital and digital/analogue conversion means, which responds to sampling pulses and internal operation clocks, for encoding an analogue signal to a PCM digital signal and for decoding a PCM digital signal to an analogue signal; and a phase locked loop circuit for generating the internal operation clocks is characterised in that the phase locked loop circuit is a digital circuit which generates the internal operation clocks by dividing the frequency of applied external clocks by a value which is determined in accordance with a frequency ratio between the sampling pulses and the external clocks.

Since the internal operation clocks are generated by dividing the frequency of applied external clocks by a value which is determined in accordance with a frequency ratio between the sampling pulses and the external clocks, the codec according to the present invention can be used in transmission systems which use external clocks, in other words read/write clocks, having different frequencies from one another. It can make the best use of an entire sampling period during a/d and d/a conversion, and it can be constructed of simple hardware.

An embodiment of the present invention will now be described, by way of example, with reference to the accompanying drawings, in which:

Fig. 1 is a block diagram schematically illustrating a codec according to the present invention;

Figure 2 is a block diagram of a codec, according to the present invention, wherein an operation clock-forming circuit is illustrated in detail, and

Fig. 3 is a timing chart of the operation of the clock-forming circuit of Fig. 2.

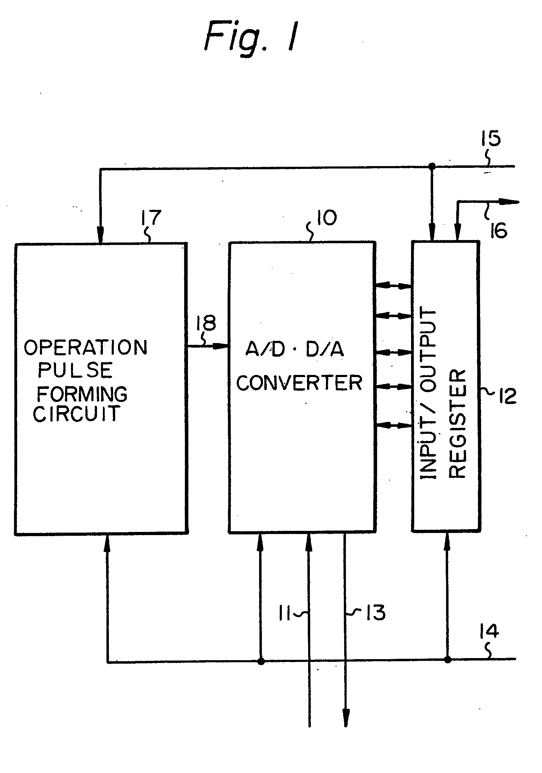

Referring to Fig. 1, a per-channel codec includes an a/d and d/a converter (coding and decoding circuit) 10. Whilst being used as a coder, the a/d and d/a converter 10 encodes an analogue signal, such as a voice signal, into a PCM signal and then simultaneously transmits all the bits of the PCM signal to an input/output register 12. Whilst being used as a decoder, the converter 10 decodes a PCM signal applied from the input/output register 12 into an analogue signal and then outputs the obtained analogue signal via a line 13.

The input/output register 12 converts the PCM coded digital signal from serial bits form to parallel bits form, and vice versa, in response to sampling pulses of 8 KHz applied thereto via a line 14 and in response to read/write pulses applied thereto via a line 15. The PCM coded digital signal is transmitted in sequence via a line 16.

The a/d and d/a converter 10 carried out the a/d or d/a conversion in response to operation clock pulses applied from an operation clock forming circuit 17 via a line 18.

The operation clock forming circuit 17 is composed of a digital PLL (phase-locked loop) circuit which divides the frequency of the sampling pulses, applied thereto via the line 14, by a set number. At the dividing operation of the circuit 17, the read/write clocks applied thereto via the line 15 are utilised for counting clock pulses.

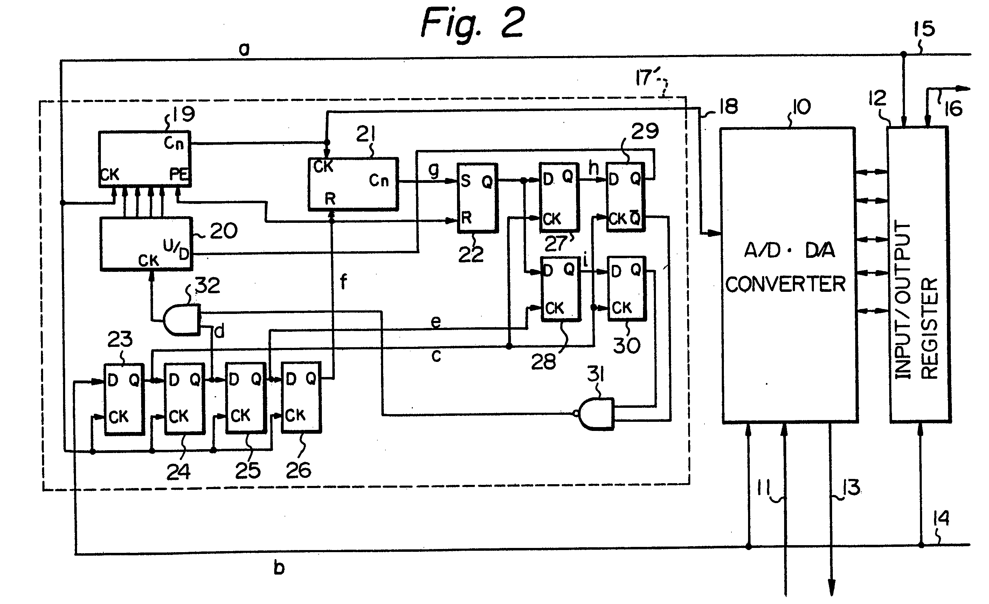

Fig. 2 illustrates an embodiment of a per-channel codec according to the present invention, and particularly illustrates in detail the construction of an operation clock forming circuit. The detailed construction of the codec will now be explained.

Circuit elements of the codec illustrated in Fig. 2 are the same as those of the codec in Fig. 1, except for an operation clock forming circuit 17'. In the clock forming circuit 17' a counter 19 which is composed of a presettable down counter receives an output from an up/down counter 20 as a preset input. The preset count of the counter 19 is decreased by one count each time a read/write clock pulse $a$ is fed in, until the count reaches zero. When the count of the counter 19 reaches zero, a carry output is produced and is transmitted to the a/d and d/a converter 10 via the line 18 as an operation clock. This carry output is also transmitted to a binary counter 21 as a counting clock. The counter 21 is constructed so as to produce a carry output when the sum of the carry outputs applied thereto from the counter 19 equals a number equivalent to a predetermined frequency division factor. A positive edge triggered R—S flip-flop 22 is set by this carry output from the counter 21 and is then reset by a pulse applied from a D-type flip-flop 26. The positive edge of the pulse from the D-type flip-flop 26 is delayed by a certain number of clock pulse periods from the positive edge of the sampling pulse. The direction of the counting mode of the up/down counter 20 is switched in accordance with the level of the Q output of the R—S flip-flop 22. The up/down counter 20 counts the number of pulses which are applied from a D-type flip-flop 24 and delayed by a certain number of clock pulse periods from the positive edge of the sampling pulses.

The D-type flip-flops 23 and 25 and the D-type flip-flops 24 and 26 produce pulses each of which has a positive edge delayed by clock pulse periods from the positive edge of the sampling pulses. D-type flip-flops 27, 28, 29 and 30, a NAND gate 31 and an AND gate 32 constitute a circuit for forming an insensitive operation area of phase control so as to stabilise the phase-locked loop control operation.

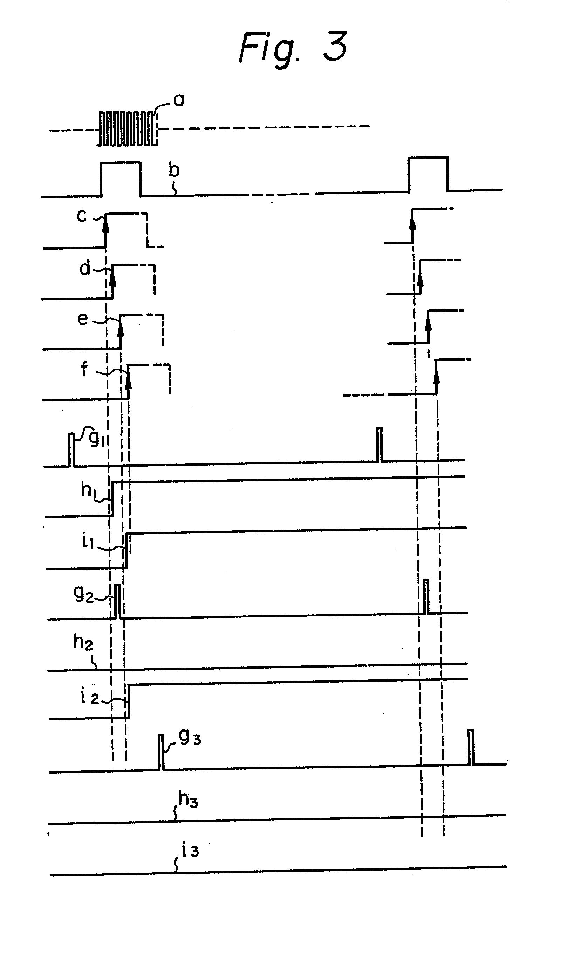

Operation of the clock forming circuit 17' will now be described with reference to the timing chart of Fig. 3.

The read/write clocks $a$, for example of 640 KHz, indicated in Fig. 3, are applied to the clock input terminals of the counter 19 and of the D-type flip-flops 23, 24, 25 and 26. Hence, if sampling pulses $b$, for example of 8 KHz, are applied to the input terminal D of the flip-flop 23, the pulses $c$, $d$, $e$ and $f$ indicated in Fig. 3 are produced in sequence from the output terminals of the flip-flops 23, 24, 25 and 26, respectively.

If the pulse $f$ from the flip-flop 26 is applied to a parallel enable terminal PE of the counter 19, and the counter 19 receives the output data of the up/down counter 20, for example the data corresponding to "5", the counter 19 starts at the received count and decreases one count each time the read/write clock $a$ enters, until the count reaches zero. Therefore, if the output data of the up/down counter 20 correspond to "5", the frequency of the carry out from the counter 19 is a fifth of the frequency of the read/write clock $a$. In a case where the frequency of the clock $a$ is 640 KHz, the frequency of the carry output from the counter 19 becomes 128 KHz.

The carry output from the counter 19 is applied to the binary counter 21, which is used as a divider having a fixed division factor, for example, a factor of "16". Therefore, the carry output $g$ from the counter 21 has a frequency which is one sixteenth of the frequency of the carry output from the counter 19. The carry output $g$ is applied to the set input terminal of the flip-flop 22.

The counting operation of the up/down counter 20 is selectively determined in accordance with a relationship with regard to the phases of the carry output $g$, the positive edge of the pulse $c$ and the positive edge of the pulse $e$.

In a case where a carry output $g_1$ from the counter 21 appears earlier than both of the positive edges of the pulses $c$ and $e$ as indicated in Fig. 3, that is, in a case where the frequency of the carry output $g_1$ is higher than the frequency of the sampling pulse $b$, Q outputs $h_1$ and $i_1$ from the flip-flops 27 and 28, respectively, respond as indicated in Fig. 3. Namely, in such a case, the output $h_1$ maintains the level "1" at the positive edge of the pulse $d$, which is used as a clock applied to the up/down counter 20. Therefore, in such a case, the counter 20 operates in the upward counting mode, so as to increase by one count each time a pulse $d$ enters, and then the counter 20 transmits the content thereof to the counter 19 in response to the pulse $f$. As a result, the division factor of the counter 19 for dividing the frequency of the clock $a$ becomes larger, and thus the output frequency of the counter 21 is lowered.

In the case where a carry output $g_2$ from the counter 21 appears between the positive edges of the pulses $c$ and $e$ as indicated in Fig. 3, Q outputs $h_2$ and $i_2$ from the flip-flops 27 and 28, respectively, respond as indicated in Fig. 3. Namely, the outputs $h_2$ and $i_2$ maintain the levels of "0" and "1", respectively, in the next sampling period. As a result, since the levels of both the Q output from the flip-flop 29 and the Q output from the flip-flop 30 become "1", and thus the output from the NAND gate 31 becomes "0", the AND gate 32 is closed. Therefore, in such a case, the pulse $d$ is not applied to the up/down counter 20 so the increasing and decreasing control of the frequency stops. In other words, the operation clock forming circuit 17' becomes operative and no phase control is carried out.

In a case where a carry output $g_3$ from the counter 21 appears later than both of the positive edges of the pulses $c$ and $e$, as indicated in Fig. 3, that is in the case where the frequency of the carry output $g_3$ is lower than the frequency of the sampling pulse $b$, Q outputs $h_3$ and $i_3$ from the flip-flops 27 and 28, respectively, respond as indicated in Fig. 3. Namely, in such a case, the output $h_3$ maintains the level "0" at the positive edge of the pulse $d$. Therefore, in such a case, the up/down counter 20 operates in the downward counting mode, so as to decrease one count each time a pulse $d$ enters, and then the counter 20 transmits the content thereof to the counter 19 in response to the pulse $f$. As a result, the division factor of the counter 19 for dividing the frequency of the clock $a$ becomes smaller, and thus the output frequency of the counter 21 is raised.

As mentioned hereinbefore, the clock forming circuit 17' produces an operation clock which has a frequency equal to the frequency of the sampling pulse $b$ multiplied by a factor determined in accordance with the division factor of the counter 21, from the read/write clock $a$ by a phase control loop for increasing and decreasing the division factor of the counter 19. Therefore, if the frequency of the read/write clock varies, the frequency of the operation clock used for a/d and d/a conversion is always automatically controlled to be a frequency which has a predetermined multiplicative factor with regard to the sampling pulse frequency. As a result, the codec according to the present invention can carry out a/d and d/a conversion making the best use of an entire period of the sampling pulses, and furthermore, the codec can be used in transmission systems which use read/write clocks having different frequencies from one another.

## Claims

1. A per-channel codec (coder/decoder) comprising analogue/digital and digital/analogue conversion means (10), which responds to sampling pulses and internal operation clocks, for encoding an analogue signal to a PCM digital signal and for decoding a PCM digital signal to an analogue signal; and a phase locked loop circuit (17, 17') for generating the internal operation clocks: characterised in that the phase locked loop circuit (17, 17') is a digital circuit which generates the internal operation clocks by dividing the frequency of applied external clocks by a value which is determined in accordance with a frequency ratio between the sampling pulses and the external clocks.

2. A codec as claimed in Claim 1, wherein the digital phase locked loop circuit (17') comprises a first circuit (19) for dividing the frequency of the applied external clocks by a dividing ratio, so as to produce the internal operation clocks; a second circuit (21) for dividing the frequency of the internal operation clocks from said first circuit by a predetermined value; a third circuit (27—30) for comparing the phase of divided pulses from said second circuit with the phase of the sampling pulses; and a fourth circuit (20) for controlling the dividing ratio of said first circuit in accordance with the result of the phase comparison, so as to decrease the phase difference between the divided pulses from the second circuit and the sampling pulses.

3. A codec as claimed in Claim 2, wherein said first circuit comprises a presettable down counter (19) which starts at a preset count corresponding to the dividing ratio controlled by said fourth circuit (20), and decreases by one count each time an external clock enters until the count reaches zero.

4. A codec as claimed in Claim 2, wherein said second circuit comprises a binary counter (21) which increases by one count each time an internal operation clock enters, until the count reaches a predetermined count.

5. A codec as claimed in Claim 2, Claim 3 or Claim 4, wherein said third circuit comprises a latch circuit which is set and reset by the divided pulses from said second circuit and the sampling pulses (b).

6. A codec as claimed in any one of Claims 2 to 5, wherein said fourth circuit comprises an up/down counter (20) which is switched to change the direction of the counting mode in accordance with the result of said phase comparison, the contents of the up/down counter being indicative of the dividing ratio of said first circuit.

7. A codec as claimed in any one of Claims 2—6, further comprising a fifth circuit (31, 32) for stopping the control operation of said fourth circuit when the phase difference between the divided pulses from said second circuit and the sampling pulses is less than a predetermined value.

## Revendications

1. Codec (codeur-décodeur) par canal comprenant un moyen de conversion analogique-numérique et numérique-analogique (10), qui répond à des impulsions d'échantillonnage et des impulsions d'horloge de fonctionnement internes en codant un signal analogique en un signal numérique MIC et en décodant un signal numérique MIC en un signal analogique, et un circuit de boucle de verrouillage de phase (17, 17') destiné à produire les impulsions d'horloge de fonctionnement internes, caractérisé en ce que le circuit de boucle de verrouillage de phase (17, 17') est un circuit numérique qui produit les impulsions d'horloge de fonctionnement internes en divisant la fréquence d'impulsions d'horloge externes appliquées par une valeur qui est déterminée en fonction d'un rapport de fréquence entre les impulsions d'échantillonnage et les impulsions d'horloge externes.

2. Codec selon la revendication 1, où le circuit de boucle de verrouillage de phase numérique (17') comprend un premier circuit (19) qui divise la fréquence des impulsions d'horloge externes appliquées par un rapport de division, afin de produire les impulsions d'horloge de fonctionnement internes; un deuxième circuit (21) qui divise la fréquence des impulsions d'horloge de fonctionnement internes venant dudit premier circuit par une valeur prédéterminée; un troisième circuit (27—30) qui compare la phase des impulsions divisées venant du deuxième circuit avec la phase des impulsions d'échantillonnage; et un quatrième circuit (20) qui commande le rapport de division dudit premier circuit en fonction du résultat de la comparaison de phase, de manière à diminuer la différence de phase entre les impulsions divisées venant du deuxième circuit et les impulsions d'échantillonnage.

3. Codec selon la revendication 2, où ledit premier circuit comprend un compteur descendant prépositionnable (19) qui commence à valeur de comptage prépositionnée correspondant au rapport de division commandé par ledit quatrième circuit (20) et diminue d'une unité à chaque fois qu'une impulsion d'horloge externe est introduite jusqu'à ce que la valeur de comptage atteigne zéro.

4. Codec selon la revendication 2, où ledit deuxième circuit comprend un compteur binaire (21) qui augmente d'une unité à chaque fois qu'une impulsion d'horloge de fonctionnement interne est introduite, jusqu'à ce que la valeur de comptage atteigne une valeur de comptage prédéterminée.

5. Codec selon la revendication 2, la revendication 3 ou la revendication 4, où ledit troisième circuit comprend un circuit de verrouillage qui est positionné et repositionné par les impulsions divisées venant dudit deuxième circuit et les impulsions d'échantillonnage (b).

6. Codec selon l'une quelconque des revendications 2 à 5, où ledit quatrième circuit comprend un compteur ascendant-descendant (20) qui est amené à changer de sens de mode de comptage en fonction du résultat de ladite comparaison de phase, le contenue du compteur ascendant-descendant étant indicatif du rapport de division dudit premier circuit.

7. Codec selon l'une quelconque des revendications 2 à 6, comprenant en outre un cinquième circuit (31, 32) permettant d'arrêter le fonctionnement de commande dudit quatrième circuit lorsque la différence de phase entre les impulsions divisées venant dudit deuxième circuit et les impulsions d'échantillonnage est inférieure à une valeur prédéterminée.

**Patentansprüche**

1. Codier- und Decodierschaltung für einen Kanal, mit einem Analog/Digital- und Digital/Analog-Umsetzer (10), welcher auf Abtastimpulse und interne Arbeitstaktimpulse anspricht, um eine Analogsignal in eine PCM-Digitalsignal zu codieren und ein PCM-Digitalsignal in ein Analogsignal zu decodieren, und mit einem phasenstarren Steuerkreis (17, 17') zur Erzeugung der internen Arbeitstaktimpulse, dadurch gekennzeichnet, daß der phasenstarre Steuerkreis (17, 17') ein digitaler Kreis ist, welcher die internen Arbeitstaktimpulse durch Division der Frequenz von zugeführten äußeren Taktimpulsen durch einen Wert erzeugt, welcher in Übereinstimmung mit einem Frequenzverhältnis zwischen den Abtastimpulsen und den externen Taktimpulsen bestimmt ist.

2. Codier- und Decodierschaltung nach Anspruch 1, bei welcher der phasenstarre Steuerkreis (17') eine erste Stufe (19) zur Division der Frequenz der zugeführten externen Taktimpulse durch ein Teilungsverhältnis zur Erzeugung der internen Arbeitstaktimpulse, eine zweite Stufe (21) zur Division der Frequenz der internen Arbeitstaktimpulse von der ersten Stufe durch einen vorbestimmten Wert, eine dritte Stufe (27—30) zum Vergleich der Phase der dividierten Impulse von der zweiten Stufe mit der Phase der Abtastimpulse und eine vierte Stufe (20) zur Steuerung des Teilungsverhältnisses der genannten ersten Stufe in Übereinstimmung mit dem Ergebnis des Phasenvergleichs umfaßt, um die Phasendifferenz zwischen den dividierten Impulsen von der zweiten Stufe und den Abtastimpulsen zu verringern.

3. Codier- und Decodierschaltung nach Anspruch 2, bei welcher die genannte erste Stufe einen voreinstellbaren Rückwärtszähler (19) umfaßt, welcher bei einem vorbestimmten Zählstand, der dem Teilungsverhältnis entspricht, welches von der genannten vierten Stufe (20) gesteuert wird, startet und seinen Zählstand jedesmal, wenn ein externer Taktimpuls ankommt, um einen Zähler verringert, bis er den Zählstand null erreicht.

4. Codier- und Decodierschaltung nach Anspruch 2, bei welcher die zweite Stufe einen binären Zähler (21) umfaßt, welcher seinen Zählstand jedesmal, wenn ein interner Arbeitstaktimpuls ankommt, um einen Zähler erhöht, bis der Zählstand einen vorbestimmten Wert erreicht.

5. Codier- und decodierschaltung nach Anspruch 2, 3, oder 4, bei welchem die genannte dritte Stufe eine Verreigelschaltung ist, welche durch die dividierten Impulse von der Zweiten Stufe und durch die Abtastimpulse (b) eingestellt und rückgestellt wird.

6. Codier- und Decodierschaltung nach einem der Ansprüche 2 bis 5, bei welcher die genannte vierte Stufe einen Vorwärts/Rückwärts-Zähler (20) umfaßt welcher geschaltet wird, um die Richtung der Zählart in Übereinstimmung mit dem Ergebnis des genannten Phasenvergleichs zu ändern, und dessen Inhalt das Teilungsverhältnis der ersten Stufe anzeigt.

7. Codier- und Decodierschaltung nach einem der Ansprüche 2 bis 6, gekennzeichnet durch eine fünfte Stufe (31, 32) zum Beenden des Steuerbetriebs der genannten vierten Stufe, wenn die Phasendifferenz zwischen den dividierten Impulsen von der genannten zweiten Stufe und den Abtastimpulsen kleiner als ein vorbestimmter Wert ist.

# Fig. I

OPERATION PULSE FORMING CIRCUIT

A/D · D/A CONVERTER

INPUT/ OUTPUT REGISTER

Fig. 2

# Fig. 3